# EUROPEAN PATENT APPLICATION

(11) **EP 3 722 052 A1**
(43) Date of publication of application: **14.10.2020**
(21) Application number: 20168305.9
(22) Date of filing: 06.04.2020
(51) Int. Cl.: B25J 9/16

(54) **A METHOD FOR DETERMINING CAMERA PLACEMENT WITHIN A ROBOTIC CELL ENVIRONMENT**

(30) Priority: 08.04.2019 GB 201904978
(71) Applicant: Arrival Limited, London W14 8TS (GB)
(72) Inventor: SVITKOV, Konstantin, London, W14 8TS (GB); RYBNIKOV, Alexander, London, W14 8TS (GB)
(74) Representative: Korenberg, Alexander Tal

(57) **Abstract**

A method for determining camera placement within a robotic cell environment, the method comprising, defining one or more characteristics of a camera; defining one or more critical areas within the robotic cell environment and a corresponding positional error threshold of each critical area within the robotic cell environment; and determining a camera location and orientation within the robotic cell environment based upon the camera characteristics, locations of the critical areas and the positional error thresholds of the critical areas; wherein the camera, when located at the determined camera location and orientation, is operable to acquire an image of the robotic cell environment which a robotic cell controller, to which the camera is communicatively coupled, is operable to use to calculate a calculated location of a critical area within the robotic cell environment; wherein the difference between the calculated location of the critical area and the defined location of the critical area defines a positional error of the defined critical area.

## Description

### Field of the Invention

This disclosure relates to a method for determining camera placement within a robotic cell environment.

### Background

Robotic cell environments typically comprise one or more robots, cameras, objects which the robots are intended to interact with and manipulate in a predetermined fashion and means for the cameras to accurately identify the location of one or more parts of the robots and the objects within the "scene" of the camera, typically comprising one or more visual identifiers, and communicate the location of these to a controller or other suitable processing device which is communicatively coupled to, and operable to control, the robots interactions with the objects. In order to ensure efficient operation of such robotic cells it is vital that the cameras are positioned at locations within the robotic cell where they are able to accurately observe and identify the visual identifiers located upon the robots and/or the one or more objects.

It is an object of the present disclosure to provide a method for determining camera placement within a robotic cell environment which provides for accurate observation within the robotic cell environment.

### Summary

Accordingly a first aspect of the present disclosure provides a method for determining camera placement within a robotic cell environment. The method comprising, defining one or more characteristics of a camera; defining one or more critical areas within the robotic cell environment and a corresponding positional error threshold of each critical area within the robotic cell environment; and determining a camera location and orientation within the robotic cell environment based upon the camera characteristics, locations of the critical areas and the positional error thresholds of the critical areas; wherein the camera, when located at the determined camera location and orientation, is operable to acquire an image of the robotic cell environment which a robotic cell controller, to which the camera is communicatively coupled, is operable to use to calculate a calculated location of a critical area within the robotic cell environment; wherein the difference between the calculated location of the critical area and the defined location of the critical area defines a positional error of the defined critical area.

Preferably, the critical areas comprise one or more visual identifiers.

Ideally, the visual identifiers comprise one or more markers which are located upon one or more parts of a robot, conveyor and/or objects located within the robotic cell environment.

Preferably, the markers comprise one or more ArUco markers.

Ideally, the critical area thresholds comprise pre-determined values or calculated values.

Preferably, when the positional error is not within the positional error threshold of the defined critical area, the method further comprises altering the one or more camera characteristics.

Ideally, when the positional error is not within the positional error threshold of the defined critical area, the method further comprises altering the location of the one or more critical areas within the robotic cell environment.

Preferably, when the positional error is not within the positional error threshold of the defined critical area, the method further comprises altering the one or more characteristics of the markers.

Ideally, altering the one or more characteristics of the markers comprises altering a size and/or shape of the markers.

Preferably, when the positional error is not within the positional error threshold of the defined critical area, the method further comprises altering a number of cameras.

Ideally, the one or more camera characteristics comprises a type of camera sensor and/or a lens which is coupled to the one or more camera sensors.

Preferably, the positional error threshold is defined in millimetres.

Ideally, the robotic cell environment comprises a real robotic cell environment or a simulated robotic cell environment.

Preferably, the determined camera location is displayed to a user via a display means, typically in the form of a graphical user interface, which is communicatively coupled to the robotic cell controller.

A second aspect of the disclosure provides a computer-readable medium comprising computer executable instructions for carrying out the method for determining camera placement within a robotic cell environment as described above.

### Brief Description of the drawings

By way of example embodiments of the present disclosure will now be described with reference to the accompanying drawings in which like numerals are used to indicate like parts, in which:
Figure 1 shows a robotic cell;
Figure 2 shows a robotic cell environment;
Figure 3 shows a top plan view of the robotic cell environment of figure 2;
Figure 4 shows a GUI (Graphical User Interface) in communication with one or more cameras of the robotic cell environment;
Figure 5 shows the GUI in communication with one or more cameras of the robotic cell environment; and
Figure 6 shows the GUI in communication with one or more cameras of the robotic cell environment.

### Detailed Description

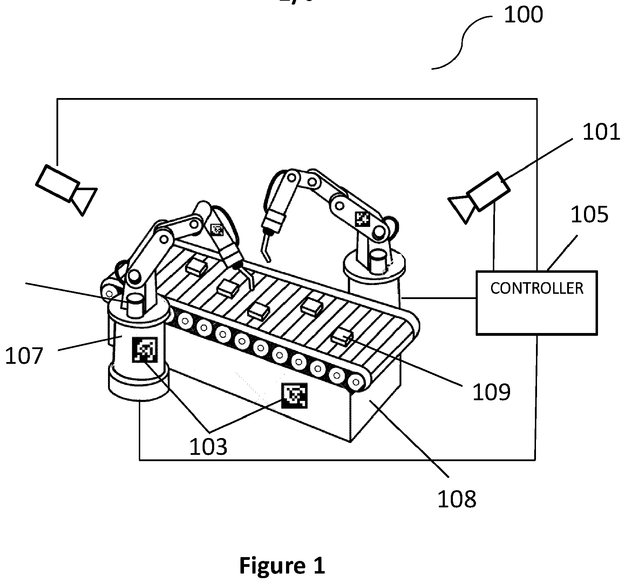

The present disclosure is directed towards a method for determining camera placement within a robotic cell environment. Referring now to Figure 1 there is shown, generally indicated by the reference numeral 100, an embodiment of a robotic cell. In this example, an assembly line robot cell is illustrated which includes two robots 107 typically comprising robot arms, which have a plurality of rotational joints 111 and which are operable to rotate about their bases, typically along an axis which is substantially perpendicular to the ground surface upon which they rest in-use. It should be understood that the robot cell 100 is not limited to two robots 107 and preferably comprises a plurality of robots 107. The robots 107 interact with objects 109 carried on a conveyor belt 108, however the objects 109 may be carried on any suitable apparatus or means which is configured to position the objects 109 relative to one or more of the robots 107. The robot cell 100 further comprises one or more cameras 101, or any other suitable image capture device, which are arranged to monitor the positioning and trajectory of the robots 107 and/or the objects 109. To this end, in a real environment, the one or more cameras 101 are typically communicatively connected via wired and/or wireless transmission means to a robotic cell controller 105 which is configured to receive images obtained from the cameras 101. Where the robotic cell environment comprises a simulated robotic cell environment the robotic cell controller 105 may be provided with images from the simulated i.e. virtual cameras 101. The robotic cell controller 105 is further coupled to the robots 107 and typically also the conveyor belt 108 and optionally the one or more objects 109. The robotic cell controller 105 is configured to transmit instructions to the plurality of robots 107 based upon one or more characteristics of the received images, wherein the instructions may comprise instructions regarding the positioning and/or trajectory of one or more parts of the robot 107 which the robot 107 should alter and/or adopt. The robotic cell controller 105 is configured to recognise one more visual identifiers 103 within the image obtained from the one or more cameras 101. The visual identifiers 103 may comprise one or more markers or the like which are positioned upon the robot 107 (as is shown in Figure 1), typically at various places thereof, or additionally or alternatively comprise visible features on the robots 107, objects 109 or other elements of the robotic cell environment or any combination thereof. The robotic cell controller 105 comprises a computing device that is configured to execute one or more software programs for the operation of the one or more robots 107 during the manufacturing process. The robotic cell environment may be a physical robotic cell or a simulated robotic cell environment i.e. comprising a generated model which accurately reflects a real robotic cell environment, the simulated model comprising simulations of the various components and features of the robotic cell environment recited above such as robotic cell controller 105, robots 107, cameras 101, objects 109, visual identifiers 103 etc.

In the embodiment illustrated in Figure 1, the visual identifiers 103 comprise a plurality of markers which are applied to one or more points on the robots 107 and can optionally be further applied to the conveyor belt assembly 108 and/or objects 109. The markers typically comprise ArUco markers which can be used for determining the locations and orientations of the one or more parts of the robots 107 using the images obtained from the cameras 101. ArUco markers are small 2D barcodes. Each ArUco marker corresponds to an identifier which can be encoded into a small grid of black and white pixels. The ArUco marker can be detected by the cameras and transmitted to the robotic cell controller 105 which includes processing means for processing software such as pre-installed applications and applying the software to the images received from the cameras 101. For example the robotic cell controller 105 may have installed thereon an ArUco decoding algorithm which is configured to locate, decode, and/or estimate the location and orientation of any ArUco markers in the field of view of the cameras 101.

The visual identifier 103 comprises a marker which can be attached or otherwise mounted or coupled to one or more objects within the robot cell environment, in particular (as shown in Figure 1) preferably upon one or more parts of the robot arm 107. The marker in this instance is composed by a wide black border and an inner binary matrix which determines its identifier. The marker size determines the size of the internal matrix. For instance, a marker size of 4x4 is composed by 16 bits. When the markers are photographed, the resulting image can include ArUco markers and the marker detection process, carried out upon the robotic cell controller 105, provides a list of detected markers within the camera image. Each detected marker can include the positions of the corners in the marker and the identification of the marker.

The marker detection process can include two main steps. 1) Detection of marker candidates. In this step the image is analyzed, by the robotic cell controller 105, in order to find square shapes that are candidates to be markers. The analysis can begin with an adaptive thresholding to segment the markers, then contours are extracted from the threshold images and those that are not convex or not approximate to a square shape are discarded. 2) After the candidate marker detection, the robotic cell controller 105 can determine if the candidate markers are actually markers by analyzing their inner codification. The marker bits of each marker are extracted by perspective transformation applied to obtain the marker in its canonical form. Then, the canonical image can be processed by the robotic cell controller 105 to separate white and black bits. The marker image can be divided in different cells according to the marker size and the border size and the amount of black or white pixels on each cell is counted to determine if it is a white or a black bit.

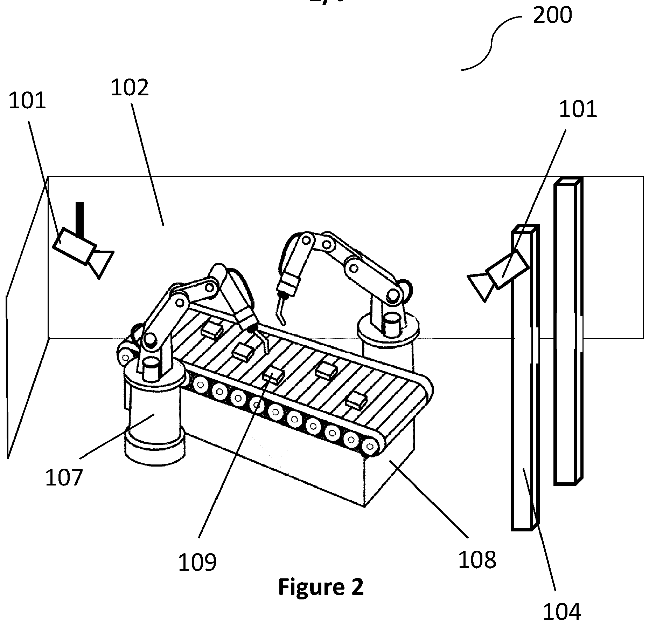

In other embodiments (not shown), the location and orientation of the robots 107 and/or the parts 40 thereof, objects 109 and conveyor belt 108 can be determined without using markers and instead using advanced computer vision algorithms implementations stored upon the robotic cell controller 105. In these embodiments, the cameras 101 can use the visible features on the robots 107, objects 109 and/or conveyor belt 108 instead of markers as visual identifiers 103. To this end the robotic cell controller 105 is typically pre-programmed with algorithms configured to recognise the shape or other visually recognizable features of the robots 107 and/or the parts thereof, objects 109 and conveyor belt 108. In one embodiment, the cameras 101 and associated robotic cell controller 105 can apply a photogrammetry process which can convert the photographs from the cameras 101 into 3D models of the robots 107, objects 109 and conveyor belt 108. Referring now to figure 2 there is shown an embodiment of a robot cell environment generally indicated by the reference numeral 200. In addition to the robotic cell shown in figure 1, there is further shown the surrounding environment in relation thereto, in this case comprising a plurality of walls 102 and columns 104. It should be understood that the walls and columns are for illustrative purposes and are not intended to be limiting. Further in relation to the robotic cell there is further shown the cameras 101 one of which is mounted, via suitable means, upon the wall 102 with its field of view (FOV) directed towards the robotic cell to define the "scene" for the camera. Additionally another camera is mounted upon one of the columns 104. Further one or more cameras 101 may be mounted upon the ceiling of the robotic cell environment 200. The positions at which the cameras 101 are placed relative to the robotic cell are vital to the operation of such, because, as mentioned previously, the operation of the robots 107 is dependent upon the images provided by the cameras 101, therefore any errors, such as positional errors, with regard to the cameras accurately identifying the one or more visual identifiers, can result in significant degradation in the efficiency and accuracy of the robotic cell 100 and potentially even stoppages caused by misalignment between the one or more parts of the robot 107 and the objects 109 with which the robot 107 is intended to interact. It should be understood that the robotic cell environment 200 may comprise a real environment or a simulated model.

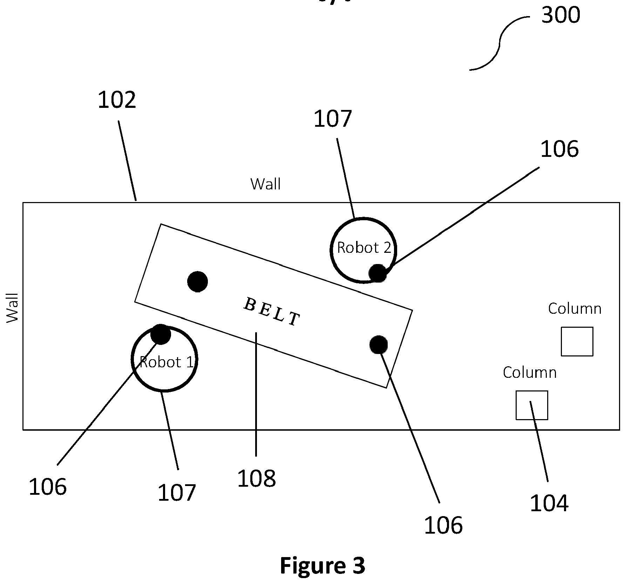

Referring now to Figure 3 there is shown generally indicated by the reference numeral 300 a top plan view of the robotic cell environment of figure 2. The features identified in relation to the robotic cell 100 and robotic cell environment 200 are likewise illustrated here from a top down perspective. In addition, critical areas 106 are shown for the robots 107 and the conveyor arrangement 108. The maximal positional error in these areas should not exceed a pre-determined threshold. Positional error comprises the error between the real or defined positioning of the visual identifiers typically provided upon the one or more parts of the robots 107, objects 109 carried on the conveyor arrangement 108 and the calculated positions of these which is calculated based upon the images acquired from the one or more cameras 101. The pre-determined error threshold for these critical areas 106 is determined based upon the specifics of the operations currently being conducted within the robotic cell environment 300, for example some actions between the robots 107 and the objects 109 will require a higher degree of precision than others. Take for example the instance where the robots 107 may be required to manipulate one or more small parts to attach or insert the parts relative to one another, this type of operation will require a much higher degree of accuracy in relation to the movements between the robot 107 and the objects 109 than for example an action where the robot merely has to pick and place the object 109. The method of the present disclosure is advantageous as it provides an automatization method and advisory system which proposes the optimal location for the cameras 101 to ensure that the observed objects' 109 coordinates will be determined with error not exceeding the allowed predetermined threshold which typically may be in millimetres.

The maximal positional error for the critical areas 106 may be determined in accordance with the method described in UK Patent Application No. 1903289.5. The method comprising:
a). Obtaining one or more pre-determined real values of the positioning and/or orientation of a visual identifier located within the robotic cell environment;
b). Acquiring an image of the robotic cell environment using a camera located at a first position within the robotic cell environment;
c). Calculating one or more values of the positioning and/or orientation of the visual identifier using the acquired image;
d). Comparing the real value of the positioning and/or orientation of the visual identifier within the robotic cell environment with the calculated value of the positioning and/or orientation of the visual identifier within the robotic cell environment;
e). Determining an error value comprising the difference between the real and calculated values;
f). Repeating steps a) to e) for a plurality of other visual identifiers located within the robotic cell environment; and
g). Estimating a maximum potential error value for the calculated value of at least one of the visual identifiers of the plurality of visual identifiers based on at least the error values determined for the plurality of visual identifiers.

Preferably, step a). obtaining one or more pre-determined real values of the positioning and/or orientation of a visual identifier located within the robotic cell environment may comprise obtaining real measurements from a physical robotic cell environment. However, alternatively, the pre-determined real values could be obtained from a simulated model representing a physical robotic cell environment or further alternatively the pre-determined real values could be obtained from design data or any other suitable source of accurate values of positioning and/or orientation of a robotic cell environment. In a preferred embodiment a simulated or virtual model of a robotic cell environment is generated and the position of one or more robots 107 and the position of one or more visual identifiers 103 are specified within the model, i.e. the position and/or orientation of the visual identifiers typically relative to the one or more robots and/or one or more cameras therein. It should be understood that the generated model comprises virtual representations of the robotic cell environments and the plurality of features e.g. robots, visual identifiers, cameras, objects and/or conveyor, thereof which can therefore be referred to as "virtual features". As the model is generated based on user requirements and particularly user parameters, the exact co-ordinate location in terms of position and/or orientation of the virtual features within the simulated robotic cell environment, in particular the visual identifiers, is accurately known and is therefore well suited for implementing the method of the embodiments described herein. It should be understood in the foregoing that the term "real value" is intended to mean values which are accurately known.

Accordingly as mentioned above, where the step a). comprises obtaining real values from a simulated model representing the robotic cell environment, step b.) may comprise acquiring an image of the robotic cell environment comprising a simulated robotic cell environment using a virtual camera located at least at a first position within the simulated robotic cell environment. For example, where a simulated model is used the method may comprise the steps of:
a). Obtaining one or more pre-determined real values of the positioning and/or orientation of a visual identifier located within a simulated robotic cell environment;
b). Acquiring an image of the simulated robotic cell environment using a virtual or simulated camera located at a first position within the simulated robotic cell environment;
c). Calculating one or more values of the positioning and/or orientation of the visual identifier within the simulated robotic cell environment using the acquired image;
d). Comparing the real value of the positioning and/or orientation of the visual identifier within the simulated robotic cell environment with the calculated value of the positioning and/or orientation of the visual identifier within the simulated robotic cell environment;
e). Determining an error value comprising the difference between the real and calculated values;
f). Repeating steps a) to e) for a plurality of other visual identifiers located within the simulated robotic cell environment; and
g). Estimating a maximum potential error value for the calculated value of at least one of the visual identifiers of the plurality of visual identifiers based on at least the error values determined for the plurality of visual identifiers;
   Optionally, h). applying the maximum potential error value to a physical robotic cell environment.

In relation to the methods described previously, preferably the step of g). estimating a maximum potential error value for the calculated value of at least one of the visual identifiers of the plurality of visual identifiers based on the error values determined for the plurality of visual identifiers, further comprises the step of determining an error distribution for the camera when located at the first position based on the differences between the real and calculated values for the plurality of visual identifiers and using the error distribution to estimate the maximum potential error value.

The cameras 101 comprise digital cameras having a sensor body and a lens. The one or more optical characteristics of the cameras may be altered based at least upon the sensor body and/or lens which is coupled to the sensor body, with different sensor bodies and lenses providing different optical characteristics such as aperture, focal length, depth of field etc. The operation of the robotic cell environment 200, 300 is dependent upon the cameras 101, in particular the various characteristics of the camera 101 and the placement of the camera 101 within the robotic cell environment 200. The cameras 101, and the various characteristics and location thereof, can be subject to change and therefore it would be advantageous to provide means by which a user can quickly and accurately determine camera placement within the robotic cell environment, in particular the optimum position for accurately observing the visual identifiers within the environment. Accordingly, a method for determining camera placement within a robotic cell environment may comprise the steps of:
defining one or more camera characteristics;
defining one or more critical areas within the robotic cell environment and a corresponding positional error threshold of each critical area within the robotic cell environment; and
determining a camera location and orientation within the robotic cell environment based upon the camera characteristics, locations of the critical areas and the positional error thresholds of the critical areas; wherein the camera, when located at the determined camera location and orientation, is operable to acquire an image of the robotic cell environment which a controller, to which the camera is communicatively coupled, is operable to use to calculate a calculated location of a critical area within the robotic cell environment;
wherein the difference between the calculated location of the critical area and the defined location of the critical area defines a positional error of the defined critical area which is to be within the positional error threshold.

Further, the step of defining one or more camera characteristics may comprise providing a display means, typically comprising a Visual Display Unit (VDU) or the like, which is configured to display a user interface using which a user is able to interact with and define the camera characteristics. To this end the step of defining the one or more critical areas within the robotic cell environment and a corresponding positional error threshold of each critical area within the robotic cell environment may also comprise defining the one or more critical areas using the user interface displayed on the display means. The method for determining camera placement within a robotic cell environment may further comprise displaying the determined camera location and/or orientation within the robotic cell environment on the suitable display means. In a real robotic cell environment, the display means is typically communicatively coupled to the camera and/or the controller.

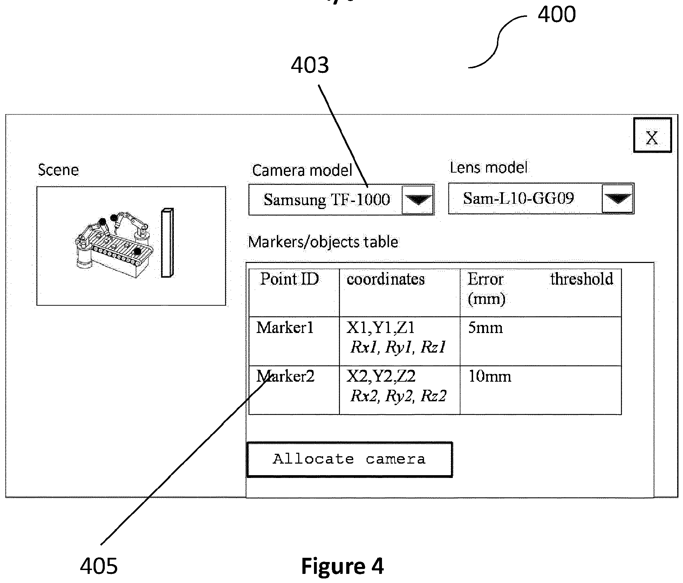

Referring now to Figure 4 there is shown generally indicated by the reference numeral 400 a user interface and in particular a GUI (Graphical User Interface) in communication with one or more cameras 101 of the simulated or real robotic cell 200 environment, the graphical user interface 400 may be presented to a user via a suitable display means which is communicatively coupled by wired or wireless transmission means (not shown) to the robotic cell controller 105, wherein the controller is operable to receive and process data input via the GUI. Using the GUI 400 the user may define one or more characteristics of the camera 403; this may include selecting the type of camera which corresponds to the sensor body and the pre-defined characteristics thereof, such as megapixel count, sensitivity, sensor type e.g. CCD or CMOS etc. The different types of camera and lens and corresponding characteristics thereof are ideally pre-programmed into the controller or other suitable device and/or are provided to the robotic cell controller via a suitable means such as via download from the internet or the like.

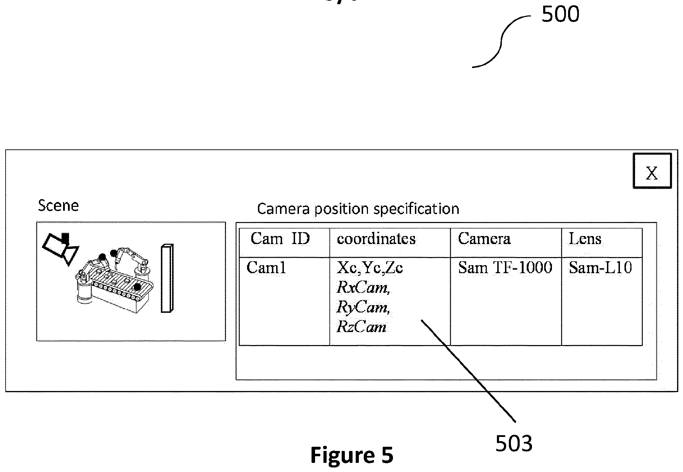

Additionally this step may also comprise selecting the lens being used with the camera, the lens type affecting a number of optical characteristics of the camera 101 such as but not limited to aperture, focal length, exposure etc. The user may subsequently define the location of the critical areas 106 within the real or simulated robotic cell environment and the positional error thresholds of the critical areas 106. The user may define the location of the critical areas 106 by inputting known or pre-determined co-ordinates of the critical areas, for example a coordinate system may be used wherein one or several of the critical areas are selected to be the origin of the coordinate system. In the example the coordinates of the centre of the critical area comprising a marker405 are given as X1, Y1, Z1 and the angles to the axis Rx1, Ry1, Rz1. Additionally, or alternatively the GUI may display an image or scene of the robotic cell environment 200 wherein the user may select the critical areas on the image, typically using an I/O device such as a mouse or keyboard or where the display means comprises a touch screen via selecting the critical areas via touch. The scene view might be supported by known simulator, based on GAZEBO (http://gazebosim.org/), Unreal Engine (https://www.unrealengine.com). Unity (https://unity3d.com), or any modelling software, which allows for the designation of dimensions and positions of the objects in 3D space. The critical areas 106 preferably comprise one or more visual identifiers 103 such as one or more markers or the like which are located upon one or more parts of the robot 107, the conveyor 108 and/or the objects 109. Alternatively the critical areas may comprise the visible features of one or more of the robots 107, objects 109 and/or conveyor belt 108 (not shown). The controller 105 may then determine a location and orientation of the virtual or real camera 101 within the simulated or real robotic cell environment 200 based upon the characteristics of the camera, the location of the critical areas defined within the real or simulated robotic cell environment and the error thresholds of the critical areas. The camera 101, when located at the determined location and orientation, is operable to acquire or provide or otherwise obtain an image of the robotic cell environment 200 which the controller 105, to which the virtual or real camera 101 is communicatively coupled, is operable to calculate a location of the critical area 106 within the robotic cell environment 200 with a positional error which is within the positional error threshold of the critical area based upon the image obtained. Figure 5 shows the GUI generally indicated by the reference numeral 500 which shows the determined position of the camera 503, this position being provided in the form of co-ordinate information as shown. It is important to understand that there could be several options for optimal position and orientation of the camera 101 within the robotic cell 100, where the positional error will not exceed the positional error threshold. In such cases the GUI 500, 600 may provide the user with a list of recommended options for the camera placement and orientation.

If it is not possible, based upon either the current camera characteristics or the critical areas, to determine a camera location which provides a positional error within the positional error threshold, the user may be instructed to, or the controller 105 may be configured to, perform one or more of the following: to alter the camera characteristics e.g. by changing the camera and/or lens type; or to alter the location of the critical area e.g. to increase the size; or where the critical areas comprise visual identifiers such as markers, to alter the type or characteristics of the marker; or to instruct the use of additional equipment for camera placement such as hangers, mounting devices etc.; or to alter the technological process' critical operations, so that the observed critical areas reside on different places or have a larger positional error tolerance; or to increase the number of cameras observing the robot cell environment 200.

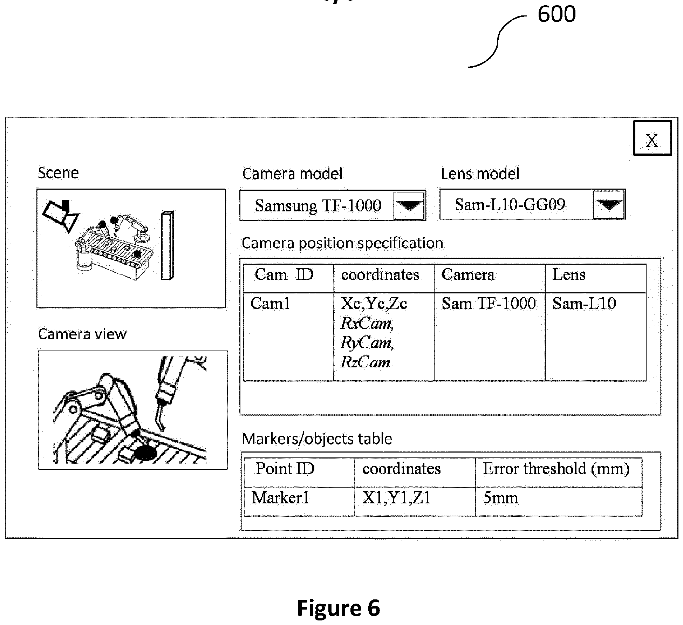

Alternatively, as shown in Figure 6, the alternative task could be solved using the present methodology as shown using the GUI generally indicated by the reference numeral 600. For example, knowing the location of the camera(s) with respect to the robotic cell environment 200 and the characteristics of the camera, the optimum positions of the markers within critical areas 106 relative to the cameras can be determined. For example, the camera 101 has set co-ordinates and orientation within the robotic cell. The window "Camera view" shows the view of the robotic cell environment as seen by the camera 101. The user can allocate the marker 103 within the critical area 106 using this window either via entering in potential co-ordinates within the robotic cell environment as shown in Figure 6 at "Markers/objects table" or selecting by mouse the marker's locations using the "camera view". Note that the marker's coordinates list depends on the implementation and coordinates system used, it may comprise 3D spatial values X1, Y1, Z1, angles or quaternions.

In each of the embodiments described, in instances where there is an area of the robotic cell environment 200 which is not observed to a sufficient degree or at all by the use of a single camera 101, consequently the robotic cell environment area may be split into a plurality of different sections with each section having a respective camera. Additionally or alternatively, the optimum camera characteristics and the optimum position of the camera within the robotic cell environment such that the camera 101 is operable to acquire an image of the greatest possible area of the robotic cell environment 200 may be selected.

Advantageously, the present disclosure allows for the estimation of the minimalistic requirements in terms of the quantity of cameras required for the operation of the robotic cell environment, such as that within a manufacturing workshop, depending on the size of the monitored objects and specifics of the controlled processes. Further the disclosure provides for optimal configuration and planning of the workshop from a computer vision standpoint and improves the overall quality of the computer vision system. Further, the disclosure decreases the amount of time that the video cameras' parameters require alignment within a real environment. The disclosure improves the control of the robotized manufacturing process and is applicable to any suitable manufacturing environment and objects.

It will be understood that while exemplary features of a method for determining camera placement within a robotic cell environment have been described, that such an arrangement is not to be construed as limiting the disclosure to such features. The method for determining positional errors within a robotic cell environment may be implemented in software, firmware, hardware, or a combination thereof. In one mode, the method is implemented in software, as an executable program, and is executed by one or more special or general purpose digital computer(s), such as a personal computer (PC; IBM-compatible, Apple-compatible, or otherwise), personal digital assistant, workstation, minicomputer, or mainframe computer. The steps of the method may be implemented by a server or computer in which the software modules reside or partially reside.

Generally, in terms of hardware architecture, such a computer will include, as will be well understood by the person skilled in the art, a processor, memory, and one or more input and/or output (I/O) devices (or peripherals) that are communicatively coupled via a local interface. The local interface can be, for example, but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the other computer components.

The processor(s), i.e. of the robotic cell controller, may be programmed to perform the functions of the method for determining positional errors within a robotic cell environment. The processor(s) is a hardware device for executing software, particularly software stored in memory. Processor(s) can be any custom made or commercially available processor, a primary processing unit (CPU), an auxiliary processor among several processors associated with a computer, a semiconductor based microprocessor (in the form of a microchip or chip set), a macro-processor, or generally any device for executing software instructions.

Memory is associated with processor(s) and can include any one or a combination of volatile memory elements (e.g., random access memory (RAM, such as DRAM, SRAM, SDRAM, etc.)) and non-volatile memory elements (e.g., ROM, hard drive, tape, CDROM, etc.). Moreover, memory may incorporate electronic, magnetic, optical, and/or other types of storage media. Memory can have a distributed architecture where various components are situated remote from one another, but are still accessed by processor(s).

The software in memory may include one or more separate programs. The separate programs comprise ordered listings of executable instructions for implementing logical functions in order to implement the functions of the modules. In the example of heretofore described, the software in memory includes the one or more components of the method and is executable on a suitable operating system (O/S).

The present disclosure may include components provided as a source program, executable program (object code), script, or any other entity comprising a set of instructions to be performed. When a source program, the program needs to be translated via a compiler, assembler, interpreter, or the like, which may or may not be included within the memory, so as to operate properly in connection with the O/S. Furthermore, a methodology implemented according to the teaching may be expressed as (a) an object oriented programming language, which has classes of data and methods, or (b) a procedural programming language, which has routines, subroutines, and/or functions, for example but not limited to, C, C++, Pascal, Basic, Fortran, Cobol, Perl, Java, and Ada.

When the method is implemented in software, it should be noted that such software can be stored on any computer readable medium for use by or in connection with any computer related system or method. In the context of this teaching, a computer readable medium is an electronic, magnetic, optical, or other physical device or means that can contain or store a computer program for use by or in connection with a computer related system or method. Such an arrangement can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this disclosure, a "computer-readable medium" can be any means that can store, communicate, propagate, or transport the program for use by or in connection with the instruction execution system, apparatus, or device. The computer readable medium can be for example, but not limited to, an electronic, magnetic, optical, electromagnetic, infrared, or semiconductor system, apparatus, device, or propagation medium. Any process descriptions or blocks in the Figures, should be understood as representing modules, segments, or portions of code which include one or more executable instructions for implementing specific logical functions or steps in the process, as would be understood by those having ordinary skill in the art.

The above detailed description of embodiments of the disclosure is not intended to be exhaustive nor to limit the disclosure to the exact form disclosed. While specific examples for the disclosure are described above for illustrative purposes, those skilled in the relevant art will recognize various modifications are possible within the scope of the disclosure. For example, while processes and blocks have been demonstrated in a particular order, different implementations may perform routines or employ systems having blocks, in an alternate order, and some processes or blocks may be deleted, supplemented, added, moved, separated, combined, and/or modified to provide different combinations or sub-combinations. Each of these processes or blocks may be implemented in a variety of alternate ways. Also, while processes or blocks are at times shown as being performed in sequence, these processes or blocks may instead be performed or implemented in parallel or may be performed at different times. The results of processes or blocks may be also held in a non-persistent store as a method of increasing throughput and reducing processing requirements.

The disclosure is not limited to the embodiment(s) described herein but can be amended or modified without departing from the scope of the present disclosure.

## Claims

1. A method for determining camera placement within a robotic cell environment, the method comprising:
defining one or more characteristics of a camera;
defining one or more critical areas within the robotic cell environment and a corresponding positional error threshold of each critical area within the robotic cell environment; and
determining a camera location and orientation within the robotic cell environment based upon the camera characteristics, locations of the critical areas and the positional error thresholds of the critical areas;
wherein the camera, when located at the determined camera location and orientation, is operable to acquire an image of the robotic cell environment which a robotic cell controller, to which the camera is communicatively coupled, is operable to use to calculate a calculated location of a critical area within the robotic cell environment;
wherein the difference between the calculated location of the critical area and the defined location of the critical area defines a positional error of the defined critical area.

2. The method of claim 1, wherein the critical areas comprise one or more visual identifiers.

3. The method of claim 2, wherein the visual identifiers comprise one or more markers which are located upon one or more parts of a robot, conveyor and/or objects located within the robotic cell environment.

4. The method of claim 3, wherein the markers comprise one or more ArUco markers.

5. The method of any preceding claim, wherein the positional error thresholds of the critical areas comprise pre-determined values or calculated values.

6. The method of any preceding claim, wherein when the positional error is not within the positional error threshold of the defined critical area, the method further comprising altering the one or more camera characteristics.

7. The method of any preceding claim, wherein when the positional error is not within the positional error threshold of the defined critical area, the method further comprising altering the location of the one or more critical areas within the robotic cell environment.

8. The method of claim 3 or 4, wherein when the positional error is not within the positional error threshold of the defined critical area, the method further comprising altering one or more characteristics of the markers.

9. The method of claim 8, wherein altering the one or more characteristics of the markers comprises altering a size and/or shape of the markers.

10. The method of any preceding claim, wherein when the positional error is not within the positional error threshold, the method further comprising altering a number of cameras.

11. The method of any preceding claim, wherein the one or camera characteristics comprise a type of camera sensor and/or a lens which is coupled to the one or more camera sensors.

12. The method of any preceding claim, wherein the positional error threshold is defined in millimetres.

13. The method of any preceding claim, wherein the robotic cell environment comprises a real robotic cell environment or a simulated robotic cell environment.

14. The method of any preceding claim, wherein the determined camera location is displayed to a user via a display means, typically in the form of a graphical user interface, which is communicatively coupled to the robotic cell controller.

15. A computer-readable medium comprising computer executable instructions for carrying out the method of any preceding claim.
